# EUROPÄISCHE PATENTSCHRIFT

(11) **EP 0 494 182 B1**
(45) Veröffentlichungstag und Bekanntmachung des Hinweises auf die Patenterteilung: **20.07.1994**
(21) Anmeldenummer: 90913817.4
(22) Anmeldetag: 07.09.1990
(51) Int. Cl.: C08J 9/04, C08L 27/06

(54) **PASTENFÖRMIGE AUFSCHÄUMBARE ZUSAMMENSETZUNG AUF BASIS VON VINYLCHLORIDPOLYMEREN, WEICHMACHERN UND FESTEN TREIBMITTELN UND VERFAHREN ZU DEREN HERSTELLUNG**
EXPANDABLE COMPOSITION BASED ON VINYL CHLORIDE POLYMERS, PLASTICIZERS AND SOLID EXPANDING AGENTS, AND A PROCESS FOR PRODUCING IT
COMPOSITION PATEUSE MOUSSANTE A BASE DE POLYMERE DE CHLORURE VINYLIQUE, DE PLASTIFIANTS ET D'AGENTS MOUSSANTS SOLIDES ET PROCEDES DE PREPARATION

(30) Priorität: 25.09.1989 DE 3931917
(43) Veröffentlichungstag der Anmeldung: 15.07.1992
(73) Patentinhaber: ROBRACHEMIE BRANDENBURGER GMBH KG, 35684 Dillenburg (DE)
(72) Erfinder: FAQUIR, Emanuel, D-6345 Eschenburg-Eibelshausen (DE)
(74) Vertreter: Sternagel, Hans-Günther, Dr.
(86) Internationale Anmeldenummer: EP9001504
(87) Internationale Veröffentlichungsnummer: WO9104289

(56) Entgegenhaltungen:
- DE-A- 2 021 615
- DE-A- 2 021 616
- GB-A- 1 477 784
- GB-A- 2 034 322
- GB-A- 2 048 893

## Beschreibung

Pastenförmige aufschäumbare Zusammensetzungen von Vinylchloridpolymeren, insbesondere Polyvinylchlorid, Weichmachern und festen Treibmitteln sind bekannt. Die aus ihnen durch Erwärmen und Gelierung der Pasten und Zersetzung der Treibmittel erhaltenen Schaumstoffe werden in der Regel als "PVC-Weichschaum" bezeichnet. Derartige Schaumstoffe werden in der Technik auf verschiedenen Gebieten verwendet.

Die bekannten Zusammensetzungen und Schaumstoffe dieser Art besitzen aber noch verschiedene Mängel. So haben z. B. zahlreiche "PVC-Weichschäume" nicht eine befriedigende Stabilität der erhaltenen Schaumstoffkörper und/oder eine zu hohe Dichte. Andere bekannte Weichschäume dieser Art benötigen zu ihrer Herstellung zu teure Ausgangstoffe und/oder zu komplizierte Verfahrensschritte.

Aus DE-A-20 21616 ist ein Plastisol anderer Zusammensetzung für die Beschichtung von Textilien bekannt.

Die GB-PS 14 77 784 betrifft ein Verfahren zur Herstellung von besonders weichen Schaumstoffmaterialien, bei dem ein Plastigel oder Plastisol aus Polyvinylchlorid oder einem Vinylchloridcopolymeren, einem Weichmacher und einem Treibmittel in einem mehrstufigen Verfahren unter Einhaltung von bestimmten Temperatur- und Druckbedingungen aufgeschäumt wird. Dieses Dokument beschreibt ebenso wie die vorliegende Erfindung Schaumstoffe aus PVC in Kombination mit Weichmachern auf Basis von Phthalsäureestern. Nichtsdestoweniger ist dort aber eine polymere Mischung beschrieben, die im wesentlichen keine Füllstoffe und auch keinen Keimbildner enthält, beides Komponenten, die für die vorliegende Erfindung wesentlich sind. Insofern gibt diese Druckschrift für den Gegenstand der vorliegenden Erfindung keine Anregung.

Aus den Nachteilen der bekannten Produkte ergibt sich der Wunsch nach verbesserten Erzeugnissen, die diese Nachteile nicht besitzen und besonders für die Verwendung auf dem Gebiet der Dämmstoffe in der Automobilindustrie und als Schaumstoffe im Bauwesen geeignet sind. Aufgabe der Erfindung ist deshalb die Bereitstellung einer verbesserten pastenförmigen aufschäumbaren Zusammensetzung auf Basis von Vinylchloridpolymeren, Weichmachern und festen Treibmitteln, die die geschilderten Nachteile nicht besitzt und sich besonders für die Ausfüllung von Hohlräumen eignet. Die Aufgabe schließt auch das Schaffen von Verfahren zur Herstellung solcher Zusammensetzungen und für ihre Verarbeitung zu Schaumstoffen ein.

Diese Aufgabe wird durch eine pastenförmige aufschäumbare Zusammensetzung gelöst, die als wesentliche Bestandteile ein Vinylchlorid enthaltendes Copolymeres, eine Weichmachermischung, einen Füllstoff, ein festes Treibmittel, und einen Keimbildner enthält sowie gegebenenfalls wenigstens einen der folgenden Bestandteile: Benzin, einen Stabilisator, einen Zellgrößenregler, ein verstärkendes Fasermaterial oder andere übliche Zusatzstoffe hierfür jeweils in speziellen Mengenbereichen.

Die vorliegende Erfindung betrifft somit eine pastenförmige aufschäumbare Zusammensetzung auf Basis von Vinylchloridpolymeren und Weichmachern enthaltend,
25 bis 45 Gew.Tl. eines Copolymeren, das in polymerisierter Form mindestens 90 Gew.Tl. an Vinylchlorid und höchstens 10 Gew.Tl. eines oder mehrerer olefinisch ungesättigter mit Vinylchlorid mischpolymerisierbaren Comonomeren enthält,
22 bis 28 Gew.Tl. einer Weichmachermischung, enthaltend Dioctylphthalat und mindestens einen der Weichmacher Dibutylphthalat und Diisobutylphthalat,
18 bis 30 Gew.Tl. eines Füllstoffes,
6 bis 11 Gew.Tl. eines festen, durch Erwärmen unter Gasabspaltung zersetzbaren Treibmittels,
0,2 bis 2,5 Gew.Tl. eines Keimbildners,
0 bis 5 Gew.Tl. Benzin,
0 bis 0,3 Gew.Tl. eines Stabilisators,
0 bis 5 Gew.Tl. eines Zellgrößenreglers,
0 bis 15 Gew.Tl. eines verstärkenden Fasermaterials und gegebenenfalls
bis zu 5 Gew.Tl. anderer üblicher Zusatzstoffe für aufschäumbare Polyvinylchlorid-Weichmacher-Plastisole, wobei die Gesamtmenge aller Bestandteile 100 Gew.Tl. beträgt.

Das in der erfindungsgemäßen Zusammensetzung enthaltene Copolymere liegt in der Zusammensetzung, bezogen auf das Gesamtgewicht der Zusammensetzung, in einer Menge von 25 bis 45 Gew.Tl., bevorzugt 28 bis 32 Gew.Tl., vor und enthält in polymerisierter Form, bevorzugt mindestens 94 Gew.Tl. und insbesondere etwa 96 Gew.Tl. Vinylchlorid und entsprechende sich auf 100% Gew.Tl. ergänzende Mengen mindestens eines mit Vinylchlorid mischpolymerisierbaren olefinischen Comonomeren. Als Comonomere sind estergruppenhaltige olefinische Comonomere bevorzugt. Derartige Comonomere sind Vinylester oder Ester von olefinisch ungesättigten Mono- oder Dicarbonsäuren, wie Acrylsäure, Methacrylsäure, Maleinsäure, Fumarsäure oder Itakonsäure. Die Ester der olefinisch ungesättigten Carbonsäuren enthalten als alkoholische Komponente bevorzugt gesättigte aliphatische Alkohole mit 1 bis 4 C-Atomen. Unter den Vinylestern sind solche von aliphatischen gesättigten Carbonsäuren mit 1 bis 4 Kohlenstoffatomen bevorzugt. Besonders bevorzugt ist Vinylacetat. Beispiele für weitere geeignete olefinische Comonomere sind Ethylen, Acrylnitril und Acrylamid.

Die für die Herstellung der erfindungsgemäßen Zusammensetzung verwendeten Copolymeren liegen zweckmäßigerweise als feinkörnige Materialien vor und werden vorzugsweise durch Emulsionspolymerisation erhalten. Ihre Molekulargewichte und ihre Teilchengrößen liegen in den gleichen Größenordnungen wie die der üblicherweise für Polyvinylchlorid-Pasten verwendeten Polyvinylchloridtypen. Die Weichmacherkomponente der erfindungsgemäßen Zusammensetzung enthält zwei oder drei Phthalsäureester. Bei allen hier in Betracht kommenden Weichmachermischungen ist das für Polyvinylchlorid als Weichmacher gut bekannte Dioctylphthalat eine Komponente der Weichmachermischung. In Kombination mit diesem Weichmacher ist in der Weichmachermischung als zusätzlicher Weichmacher entweder Dibutylphthalat oder Diisobutylphthalat vorhanden. Bei einer bevorzugten Ausführungsform der Erfindung enthält die Weichmachermischung außer Dioctylphthalat sowohl Dibutylphthalat als auch Diisobutylphthalat. Bevorzugte Weichmachermischungen sind Mischungen, die 78 bis 84 Gew.Tl., vorzugsweise 80 bis 82 Gew.Tl., Dioctylphthalat und 16 bis 22 Gew.Tl., vorzugsweise 18 bis 20 Gew.Tl., Dibutylphthalat oder Diisobutylphthalat enthalten. Eine andere bevorzugte Weichmachermischung enthält 15 bis 25 Gew.Tl. Dioctylphthalat, 30 bis 50 Gew.Tl. Dibutylphthalat und 30 bis 50 Gew.Tl. Diisobutylphthalat. Bevorzugte Ausbildungen der Mischungen der Weichmacher aus drei Phthalsäurester enthalten 18 bis 22 Gew.Tl., vorzugsweise 18 bis 20 Gew.Tl., Dioctylphthalat, 36 bis 44 Gew.Tl. Dibutylphthalat und 36 bis 44 Gew.Tl. Diisobutylphthalat und insbesondere 20 Gew.Tl. Dioctylphthalat, 40 Gew.Tl. Dibutylphthalat und 40 Gew.Tl. Diisobutylphthalat.

Statt der Mischung der Weichmacher können bei der Herstellung der Pasten auch einzelne Weichmacher in entsprechenden Mengen benutzt werden, die dann bei der Herstellung der Paste die gewünschte Weichmachermischung ergeben.

Unter den festen Treibmitteln sind bei der Erfindung organische Treibmittel insbesondere Azodicarbonamid, Azo-bis(isobutyronitril), Diphenyloxid, Disulfonsäurehydrazid oder organische N-Nitrosoverbindungen geeignet. Die Treibmittel sind in der pastenförmigen Zusammensetzung in der Menge von 6 bis 11 Gew.Tl., bevorzugt 6 bis 8 Gew.Tl., vorhanden.

Als Füllstoffe kommen die bei der Herstellung von Polyvinylchloridpasten bekannten Füllstoffe in Betracht, wobei Calciumcarbonat-Füllstoffe bevorzugt sind. Besonders geeignet als Füllstoff ist unbehandelte Kreide.

Eine weitere Komponente der erfindungsgemäßen Zusammensetzung sind Testbenzine, die in der Zusammensetzung einen Anteil von 0 bis 5 Gew.Tl., bevorzugt 2 bis 4 Gew.Tl., insbesondere 3 Gew.Tl., ausmachen, und in der Regel Siedegrenzen von 109 bis 335° C haben, z.B. "Corbasol" der Kölner Benzinraffinerie.

Der Keimbildner liegt in der Zusammensetzung in einer Menge von 0,2 bis 2,5 Gew.Tl., bevorzugt 0,2 bis 1,2 Gew.Tl., ganz bevorzugt 0,5 bis 1 Gew.Tl. vor. Ein bevorzugter Keimbildner ist Zinkoxid, Beispiele für andere geeignete Keimbildner sind Silicaaerogel, Calciumstearat, Cadmium-Zink und Kalium-Zink ("Irgastab K 101" der Fa. Ciba-Geigy).

Der in der erfindungsgemäßen Zusammensetzung gegebenenfalls verwendete Stabilisator hat die Aufgabe, den durch Erwärmen der pastenförmigen Zusammensetzung erhaltenen Schaumstoff in seiner Größe und Form zu erhalten. In der Regel wird er in Menge von 0 bis zu 0,3 Gew.Tl.,bevorzugt 0,05 bis 0,2 Gew.Tl. und inbesondere 0,1 Gew.Tl. der Zusammensetzung verwendet. Als weiterer Bestandteil kann in der erfindungsgemäßen Zusammensetzung ein Zellgrößenregler, insbesondere Natriumbicarbonat, verwendet werden. Sein Anteil kann bis von 0 zu 5 Gew.Tl. betragen, wobei Mengen von 2 bis 4 Gew.Tl., insbesondere 3 Gew.Tl., bevorzugt sind.

Als fakultativer Bestandteil kann in der pastenförmigen Zusammensetzung gemäß der Erfindung auch ein verstärkendes Fasermaterial in Mengen von 0 bis 15 Gew.Tl., bevorzugt 0 bis 5 Gew.Tl., vorhanden sein. Derartige Pasten sind besonders für die Herstellung von Schaumstoffen für das Bauwesen geeignet. Beispiele für verstärkende Fasermaterialien sind Glasfasern, Steinwolle und Polyamidfasers.

Die Herstellung der pastenförmigen aufschäumbaren Zusammensetzungen erfolgt durch Mischen der Ausgangsstoffe unter Vermeidung der Gelierung der entstehenden Paste. Dazu nimmt man die Mischung der Ausgangsstoffe bevorzugt bei einer Temperatur von 20 bis 30° C vor. Man legt in der Regel die Weichmachermischung vor und rührt die festen Ausgangsstoffe ein. Es können übliche Rühr- oder Mischeinrichtungen für die Herstellung von Pasten verwendet werden. Für die Herstellung in größerem Maßstab sind Einrichtungen geeignet, wie sie für die Herstellung von Polyvinylchlorid-Pasten verwendet werden, geeignet sind, z. B. Dissolver, Planetenrührwerke oder Scheibenrührwerke.

Die erfindungsgemäßen pastenförmigen Zusammensetzungen lassen sich für die Herstellung von Schaumstoffen mit weitgehend geschloßenen Zellen verwenden. Dazu erwärmt man die pastenförmigen Zusammensetzungen auf eine Temperatur, bei der eine Gelierung der Masse eintritt und eine Zersetzung des Treibmittels unter Gasabspaltung erfolgt. Die Erwärmungstemperaturen liegen bevorzugt bei 120 bis 180°C und man stimmt die Erwärmungstemperatur und die Erwärmungszeit so aufeinander ab, daß eine maximale Aufschäumung der Paste erreicht wird. In der Regel benötigt man dazu eine Erwärmungszeit von 20 bis 35 Minuten.

In einer besonders in der Automobilindustrie für die Herstellung von Dämmstoffen geeigneten Ausbildungsform der Erfindung erwärmt man die pastenförmige Zusammensetzung in einem Hohlraum und stimmt dabei die Menge der Zusammensetzung und das Volumen des Hohlraums so aufeinander ab, daß der Hohlraum durch die aufgeschäumte Zusammensetzung mindestens weitgehend ausgefüllt wird.

Die nachfolgenden Beispiele zeigen verschiedene Ausführungsformen der Erfindung. Alle Angaben über Mengen beziehen sich auf Gewichtsangaben.

### Beispiel 1

In einen Laboratoriums-Dissolver werden in der angegebenen Reihenfolge bei Raumtemperatur folgende Ausgangsstoffe gegeben:
40 g einer Weichmachermischung aus 80% Dioctylphthalat und 20% Dibutylphthalat,
3,5 g eines Testbenzins mit den Siedegrenzen von 150 - 190°C,
26 g eines Copolymeren mit einem überwiegenden Anteil an Vinylchlorid,
(Vestolit B 7090 Hüls AG, BRD)
25,5 g unbehandelte Kreise
(Juraperle BS der Firma Ulmer Füllstoff-Vertriebs-GmbH) Siebanalyse 32-40 µm; 2,7 g/cm³; Schüttdichte 695 kg/m³
8,5 g Azodicarbonamid
2,5 g Zinkoxid
0,1 g Dicyandiamid
10 g Polyamidfaser
(Faserlänge von ungefähr 10 µm)
In die vorgelegte Mischung aus Weichmacher und Benzin wird das Copolymere bei einer Umdrehungsgeschwindigkeit des Rührwerkes von 300 UPM eingetragen und die erhaltene Mischung wird 20 Min. gerührt. Danach wird die Kreide im Verlauf von 2 Min. langsam zugegeben und dann wird die Mischung noch 3 Min. gerührt, wobei die Rührgeschwindigkeit auf 500 UPM erhöht wird. Es schließt sich dann die Zugabe der anderen Ausgangstoffe an und die fertige Mischung wird etwa 10 Min. bei 850 UPM gerührt, wobei darauf geachtet wird, daß ihre Temperatur nicht über 32°C steigt.

Die erhaltene pastenförmige aufschäumbare Zusammensetzung ist bei 20°C oder niedrigen Temperaturen gut lagerbeständig.

Ähnliche Zusammensetzungen werden erhalten, wenn man statt der speziellen angegebenen Ausgangstoffe andere in der Beschreibung genannte Stoffe verwendet, z. B. Steinwolle, Glasfasern oder Polyacrylnitrilfasern statt Polyamidfasern.

### Beispiel 2

Die gemäß Beispiel 1 herstellbare Zusammensetzung läßt sich in einer Spritzpistole einer Düse von 0,8 mm bei einem Druck von 5 bar und bei 22° C verspritzen und durch Erwärmen auf etwa 160° C gelieren und aufschäumen. Für diese Gelierung kann z. B. eine Geliereinrichtung der Firma Korper-Schmidt verwendet werden.

Eine vorteilhafte Gelierungszeit liegt bei 20 Min.

Nach der Gelierung und Aufschäumung bildet die Masse einen feinporigen Schaumstoff mit weitgehend geschlossen Zellen, der beim Lagern und Gebrauch seine Steighöhe behält und dessen Dichte bei der in Beispiel 1 angegebenen Zusammensetzung der Ausgangstoffe bei 1,45 g/cm³ liegt.

## Patentansprüche

1. Pastenförmige aufschäumbare Zusammensetzung auf Basis von Vinylchloridpolymeren und Weichmachern enthaltend:
(a) 25 bis 45 Gew.Tl. eines Copolymeren, das in polymerisierter Form mindestens 90 Gew.Tl. an Vinylchlorid und höchstens 10 Gew.Tl. eines oder mehrerer olefinisch ungesättigter mit Vinylchlorid mischpolymerisierbaren Comonomeren enthält,
(b) 22 bis 28 Gew.Tl. einer Weichmachermischung, enthaltend Dioctylphthalat und mindestens einen der Weichmacher Dibutylphthalat und Diisobutylphthalat,
(c) 18 bis 30 Gew.Tl. eines Füllstoffes,
(d) 6 bis 11 Gew.Tl. eines festen, durch Erwärmen unter Gasabspaltung zersetzbaren Treibmittels,
(e) 0,2 bis 2,5 Gew.Tl. eines Keimbildners,
(f) 0 bis 5 Gew.Tl. Benzin,
(g) 0 bis 0,3 Gew.Tl. eines Stabilisators,
(h) 0 bis 5 Gew.Tl. eines Zellgrößenreglers,
(i) 0 bis 15 Gew.Tl. eines verstärkenden Fasermaterials und gegebenenfalls
(j) bis zu 5 Gew.Tl. anderer üblicher Zusatzstoffe für aufschäumbare Polyvinylchlorid-Weichmacher-Plastisole, wobei die Gesamtmenge aller Bestandteile (a bis j) 100 Gew.Tl. beträgt.

2. Zusammensetzung nach Anspruch 1,
**dadurch gekennzeichnet,**
daß das Comonomere des Copolymeren ein estergruppenhaltiges Comonomeres ist.

3. Zusammensetzung nach Anspruch 1 oder 2,
**dadurch gekennzeichnet,**
daß das Copolymere als Comonomeres einen Vinylester einer aliphatischen gesättigten Monocarbonsäure mit 1 bis 4 Kohlenstoffatomen im Molekül enthält.

4. Zusammensetzung nach einem der Ansprüche 1 bis 3,
**dadurch gekennzeichnet,**
daß das Copolymere mindestens 94 Gew.Tl. Vinylchlorid und höchstens 6 Gew.Tl. des Comonomeren enthält.

5. Zusammensetzung nach einem der Ansprüche 1 bis 4,
**dadurch gekennzeichnet,**
daß das Copolymere etwa 96 Gew.Tl. Vinylchlorid und etwa 4 Gew.Tl. Comonomeres enthält.

6. Zusammensetzung nach Anspruch 5,
**dadurch gekennzeichnet,**
daß das Comonomere Vinylacetat ist.

7. Zusammensetzung nach einem der Ansprüche 1 bis 6,
**dadurch gekennzeichnet,**
daß die Weichmachermischung 78 bis 84 Gew.Tl. Dioctylphthalat und 16 bis 22 Gew.Tl. Dibutylphthalat oder Diisobutylphthalat enthält.

8. Zusammensetzung nach einem der Ansprüche 1 bis 6,
**dadurch gekennzeichnet,**
daß die Weichmachermischung 15 bis 25 Gew.Tl. Dioctylphthalat, 30 bis 50 Gew.Tl. Dibutylphthalat und 30 bis 50 Gew. Tl. Diisobutylphthalat enthält, wobei diese Gewichtsteile auf die Weichmachermischung bezogen sind.

9. Zusammensetzung nach Anspruch 8,
**dadurch gekennzeichnet,**
daß die Weichmachermischung 18 bis 22 Gew.Tl. Dioctylphthalat, 36 bis 44 Gew.Tl. Dibutylphthalat und 36 bis 44 Gew.Tl. Diisobutylphthalat enthält.

10. Zusammensetzung nach Anspruch 9,
**dadurch gekennzeichnet,**
daß die Weichmachermischung 20 Gew.Tl. Dioctylphthalat, 40 Gew.Tl. Dibutylphthalat und 40 Gew.Tl. Diisobutylphthalat enthält.

11. Zusammensetzung nach einem der Ansprüche 1 bis 10,
**dadurch gekennzeichnet,**
daß das Treibmittel ein organisches Treibmittel ist.

12. Zusammensetzung nach Anspruch 11,
**dadurch gekennzeichnet,**
daß das Treibmittel mindestens eines der Treibmittel Azodicarbonamid, Azo-bis-(isobutyronitril), Diphenyloxid, Disulfonsäurehydrazid oder eine organische N-Nitrosoverbindung ist.

13. Zusammensetzung nach einem der Ansprüche 1 bis 12,
**dadurch gekennzeichnet,**
daß der Füllstoff Calciumcarbonat ist.

14. Zusammensetzung nach Anspruch 13,
**dadurch gekennzeichnet,**
daß der Füllstoff unbehandelte Kreide ist.

15. Zusammensetzung nach einem der Ansprüche 1 bis 14,
**dadurch gekennzeichnet,**
daß der Keimbildner Zinkoxid ist.

16. Zusammensetzung nach einem Ansprüche 1 bis 15,
**dadurch gekennzeichnet,**
daß das Benzin ein Testbenzin ist.

17. Zusammensetzung nach einem der Ansprüche 1 bis 16,
**dadurch gekennzeichnet,**
daß der Stabilisator Dicyandiamid ist.

18. Zusammensetzung nach einem der Ansprüche 1 bis 17,
**dadurch gekennzeichnet,**
daß der Zellgrößenregler Natriumbicarbonat ist.

19. Verfahren zur Herstellung einer Zusammensetzung nach einem der Ansprüche 1 bis 18,
**dadurch gekennzeichnet,**
daß man die genannten Ausgangstoffe unter Vermeidung einer Gelierung mischt.

20. Verfahren nach Anspruch 19,
**dadurch gekennzeichnet,**
daß man die Mischung der Ausgangsstoffe bei einer Temperatur von 20 bis 30°C vornimmt.

21. Verfahren zur Herstellung eines Schaumstoffes aus einer der Zusammensetzungen nach einem der Ansprüche 1 bis 18,
**dadurch gekennzeichnet,**
daß man die gemischten pastenförmigen Ausgangstoffe auf eine Temperatur erwärmt, bei der eine Gelierung der Masse und eine Zersetzung des Treibmittels eintritt.

22. Verfahren nach Anspruch 21,
**dadurch gekennzeichnet,**
daß man die Zusammensetzung auf eine Temperatur von 120 bis 180°C erwärmt.

23. Verfahren nach einem der Ansprüche 21 oder 22,
**dadurch gekennzeichnet,**
daß man die Erwärmungstemperatur und die Erwärmungszeit so bemißt, daß eine maximale Aufschäumung der Masse erreicht wird.

24. Verfahren nach einem der Ansprüche 21 bis 23,
**dadurch gekennzeichnet,**
daß man das Erwärmen der pastenförmigen Zusammensetzung in einem Hohlraum vornimmt und die Menge der Zusammensetzung und das Volumen des Hohlraums so aufeinander abstimmt, daß der Hohlraum durch die aufgeschäumte Zusammensetzung mindestens weitgehend ausgefüllt wird.

## Claims

1. Pasty foamable composition based on polyvinylchloride and plasticizer comprising:
(a) from 25 to 45 parts by weight of a copolymer comprising in polymerized form at least 90 parts by weight of vinylchloride and a maximum of 10 parts by weight of one or more olefinic unsaturated comonomers copolymerizable with vinylchloride,
(b) from 22 to 28 parts by weight of a blend of plasticizers comprising dioctylphthalate and at least one of dibutylphthalate and diisobutylphthalate,
(c) from 18 to 30 parts by weight of a filler,
(d) from 6 to 11 parts by weight of a solid blowing agent decomposing and separating gas upon heating,
(e) from 0.2 to 2.5 parts by weight of a nucleating agent,
(f) from 0 to 5 parts by weight naphtha,
(g) from 0 to 0.3 parts by weight of a stabilizer,
(h) from 0 to 5 parts by weight of a cell size controlling agent,
(i) from 0 to 15 parts by weight of a reinforcing fiber material, and optionally,
(j) up to 5 parts by weight of other common additives for foamable polyvinylchloride-plasticizer-soles wherein the total amount of all components (a to j) is 100 parts by weight.

2. The composition of claim 1,
**characterized in that**
the comonomer of the copolymer is a comonomer comprising ester groups.

3. The composition of claim 1 or 2,
**characterized in that**
the copolymer comprises a vinylester of an aliphatic saturated monocarboxylic acid with 1 to 4 carbon atoms in the molecule as comonomer.

4. The composition of any of claims 1 to 3,
**characterized in that**
the copolymer comprises at least 94 parts by weight of vinylchloride and a maximum of 6 parts by weight of the comonomer.

5. The composition of any of claims 1 to 4,
**characterized in that**
the compolymer comprises about 96 parts by weight of vinylchloride and about 4 parts by weight of the comonomer.

6. The composition of claim 5,
**characterized in that**
the comonomer is vinylacetate.

7. The composition of any of claims 1 to 6,
**characterized in that,**
the blend of plasticizers comprises from 78 to 84 parts by weight of dioctylphthalate and from 16 to 22 parts by weight of dibutylphthalate or diisobutylphthalate.

8. The composition of any of claims 1 to 6,
**characterized in that**
the blend of plasticizers comprises from 15 to 25 parts by weight of dioctylphthalate, from 30 to 50 parts by weight of dibutylphthalate and from 30 to 50 parts by weight of diisobutylphthalate wherein these parts by weight are based on the blend of plasticizers.

9. The composition of claim 8,
**characterized in that**
the blend of plasticizers comprises from 18 to 22 parts by weight of dioctylphthalate, from 36 to 44 parts by weight of dibutylphthalate and from 36 to 44 parts by weight of diisobutylphthalate.

10. The composition of claim 9,
**characterized in that**
the blend of plasticizers comprises 20 parts by weight of dioctylphthalate, 40 parts by weight of dibutylphthalate and 40 parts by weight of diisobutylphthalate.

11. The composition of any of claims 1 to 10,
**characterized in that**
the blowing agent is an organic blowing agent.

12. The composition of claim 11,
**characterized in that**
the blowing agent is at least one of azodicarbonamide, azo-bis-(isobutyronitrile), diphenyloxide, disulfonic acid hydrazide or an organic N-nitroso compound.

13. The composition of any of claims 1 to 12,
**characterized in that**
the filler is calcium carbonate.

14. The composition of claim 13,
**characterized in that**
the filler is non-treated whiting.

15. The composition of any of claims 1 to 14,
**characterized in that**
the nucleating agent is zinc oxide.

16. The composition of any of claims 1 to 15,
**characterized in that**
the naphtha is white spirit.

17. The composition of any of claims 1 to 16,
**characterized in that**
the stabilizer is dicyandiamide.

18. The composition of any of claims 1 to 17,
**characterized in that**
the cell size controlling agent is sodium bicarbonate.

19. A method for preparing a composition of any of claims 1 to 18,
**characterized in that**
the listed starting components are mixed without gelation.

20. The method of claim 19,
**characterized in that**
the starting components are mixed at a temperature of from 20 to 30° C.

21. A method for preparing a plastic foam from a composition of any of claims 1 to 18,
**characterized in that**
the mixed pastry starting components are heated to a temperature at which the mass gels and the blowing agent decomposes.

22. The method of claim 21,
**characterized in that**
the composition is heated to a temperature of from 120 to 180° C.

23. The method of any of claims 21 or 22,
**characterized in that**
the heating temperature and the heating time are selected to achieve maximum foaming of the mass.

24. The method of any of claims 21 to 23,
**characterized in that**
the pasty composition is heated in a cavity and the amount of the composition and the volume of the cavity are adapted so that the cavity is at least largely filled by the foamed composition.

## Revendications

1. Composition pâteuse moussante à base de polymère de chlorure de vinyle et de plastifiants, contenant
(a) de 25 à 45 parties en poids d'un copolymère qui, sous forme polymérisée, contient au moins 90 parties en poids de chlorure de vinyle et au maximum 10 parties en poids d'un ou plusieurs comonomères à insaturations éthyléniques polymérisables en mélange avec du chlorure de vinyle,
(b) de 22 à 28 parties en poids d'un mélange de plastifiants, contenant du phtalate de dioctyle et au moins l'un des plastifiants:phtalate de dibutyle et phtalate de diisobutyle,
(c) de 18 à 30 parties en poids d'une charge,
(d) de 6 à 11 parties en poids d'un agent moussant solide, décomposable par la chaleur en libérant un gaz,
(e) de 0,2 à 2,5 parties en poids d'un agent de nucléation,
(f) de 0 à 5 parties en poids d'essence,
(g) de 0 à 0,3 partie en poids d'un stabilisateur,
(h) de 0 à 5 parties en poids d'un régulateur de la taille des cellules,
(i) de 0 à 15 parties en poids d'un matériau fibreux de renforcement, et éventuellement
(j) jusqu'à 5 parties en poids d'autres adjuvants habituels pour plastisols moussants à base de chlorure de vinyle et de plastifiants, la quantité totale de l'ensemble des composants (a à j) étant de 100 parties en poids.

2. Composition selon la revendication 1, caractérisée en ce que le comonomère du copolymère est un comonomère contenant des groupes ester.

3. Composition selon la revendication 1 ou 2, caractérisée en ce que le copolymère contient, comme comonomère, un ester vinylique d'un acide monocarbonique aliphatique saturé ayant de 1 à 4 atomes de carbone dans la

4. Composition selon l'une des revendications 1 ou 3, caractérisée en ce que le copolymère contient au moins 94 parties en poids de chlorure de vinyle et au maximum 6 parties en poids du comonomère.

5. Composition selon l'une des revendications 1 à 4, caractérisée en ce que le copolymère contient environ 96 parts en poids de chlorure de vinyle et environ 4 parties en poids du comonomère.

6. Composition selon la revendication 5, caractérisée en ce que le copolymère est de l'acétate de vinyle.

7. Composition selon l'une des revendications 1 à 6, caractérisée en ce que le mélange de plastifiants contient de 78 à 84 parties en poids de phtalate de dioctyle et de 16 à 22 parties en poids de phtalate de dibutyle ou de phtalate de diisobutyle.

8. Composition selon l'une des revendications 1 à 6, caractérisée en ce que le mélange de plastifiants contient de 15 à 25 parts en poids de phtalate de dioctyle, de 30 à 50 parties en poids de phtalate de dibutyle et de 30 à 50 parts en poids de phtalate de diisobutyle, ces parties en poids se rapportant au mélange de plastifiants.

9. Composition selon la revendication 8, caractérisée en ce que le mélange de plastifiants contient de 18 à 22 parties en poids de phtalate de dioctyle, de 36 à 44 parties en poids de phtalate de dibutyle et de 36 à 44 parties en poids de phtalate de diisobutyle.

10. Composition selon la revendication 9, caractérisée en ce que le mélange de plastifiants contient 20 parties en poids de phtalate de dioctyle, 40 parties en poids de phtalate de dibutyle et 40 parties en poids de phtalate de diisobutyle.

11. Composition selon l'une des revendications 1 à 10, caractérisée en ce que l'agent moussant est un agent moussant organique.

12. Composition selon la revendication 11, caractérisée en ce que l'agent moussant est au moins l'un des agents moussants suivants : azodicarbonamide, azo-bis(isobutyronitrile), oxyde de diphényle, hydrazide de l'acide disulfonique ou un composé organique N-nitroso.

13. Composition selon l'une des revendications 1 à 12, caractérisée en ce que la charge est du carbonate de calcium.

14. Composition selon la revendication 13, caractérisée en ce que la charge est de la craie non-traitée.

15. Composition selon l'une des revendications 1 à 14, caractérisée en ce que l'agent de nucléation est de l'oxyde de zinc.

16. Composition selon l'une des revendications 1 à 15, caractérisée en ce que l'essence est du white spirit.

17. Composition selon l'une des revendications 1 à 16, caractérisée en ce que le stabilisateur est de la dicyandiamide

18. Composition selon l'une des revendications 1 à 17, caractérisée en ce que le régulateur de la taille des cellules est du bicarbonate de sodium.

19. Procédé de préparation d'une composition selon l'une des revendications 1 à 18, caractérisé en ce que l'on mélange les matières premières citées en évitant une gélification.

20. Procédé selon la revendication 19, caractérisé en ce que l'on procède au mélange des matières premières à une température de 20 à 30°C

21. Procédé de fabrication d'un mousse à partir de l'une des compositions selon l'une des revendications 1 à 18, caractérisé en ce que l'on chauffe les matières pâteuses de départ mélangées à une température à laquelle il se produit une gélification de la masse et une décomposition de l'agent moussant.

22. Procédé selon la revendication 21, caractérisé en ce que l'on chauffe la composition à une température de 120 à 180°C

23. Procédé selon l'une des revendications 21 ou 22, caractérisé en ce que l'on règle la température de chauffage et la durée de chauffage de manière telle que l'on obtienne un moussage maximal de la masse.

24. Procédé selon l'une des revendications 21 à 23, caractérisé en ce que l'on procède au chauffage de la composition pâteuse dans en espace creux et que l'on règle la quantité de la composition et le volume de l'espace creux l'un par rapport à l'autre de telle manière que l'espace creux soit au moins largement rempli par la composition moussante.
